# EUROPÄISCHE PATENTSCHRIFT

(11) **EP 3 105 848 B1**
(45) Veröffentlichungstag und Bekanntmachung des Hinweises auf die Patenterteilung: **10.07.2019**
(21) Anmeldenummer: 15708749.5
(22) Anmeldetag: 16.02.2015
(51) Int. Cl.: H02P 6/18

(54) **STEUERSCHALTUNG UND REGELUNGSVERFAHREN FÜR SYNCHRONMASCHINE**
CONTROL CIRCUIT AND CONTROL METHOD FOR A SYNCHRONOUS MACHINE
CIRCUIT DE COMMANDE ET PROCÉDÉ DE RÉGLAGE D'UNE MACHINE SYNCHRONE

(30) Priorität: 14.02.2014 DE 102014202771
(43) Veröffentlichungstag der Anmeldung: 21.12.2016
(73) Patentinhaber: Sirona Dental Systems GmbH, 64625 Bensheim (DE)
(72) Erfinder: ALTENDORF, Hans-Walter, 67551 Worms (DE); HILL, Volker, 64625 Bensheim (DE)
(74) Vertreter: Sommer, Peter
(86) Internationale Anmeldenummer: PCT/EP2015/053207
(87) Internationale Veröffentlichungsnummer: WO 2015/121467

(56) Entgegenhaltungen:
- EP-A1- 2 570 291
- EP-A2- 0 993 108
- CN-A- 1 215 944
- DE-A1-102012 006 491
- DE-U1-202011 052 205

## Beschreibung

### Technisches Gebiet

Die Erfindung betrifft eine Steuerschaltung für eine Synchronmaschine eines zahnärztlichen Handstücks mit einer Spannungsversorgung sowie ein Verfahren zur Bestimmung der Drehstellung eines Rotors einer Synchronmaschine zur Drehzahlregelung der Synchronmaschine.

### Stand der Technik

Als elektrischer Antrieb beispielsweise für dentale Handstücke sind Synchronmotoren bekannt, also Synchronmaschinen im Motorbetrieb, bei denen ein Rotor im Stator synchron mit einem bewegten Drehfeld mitläuft.

Zur Regelung solcher Synchronmaschinen ist es weiterhin bekannt während des Betriebs die Stellung des Rotors in Bezug auf das drehende Statorfeld zu ermitteln. Aus der DE 195 27 982 A1 ist beispielsweise bekannt, hierfür Sensoren vorzusehen.

Nachteilig ist, dass ein solcher Sensor einen zusätzlichen Aufwand darstellt und dass eine Integration eines Sensors beispielsweise in ein dentales Handstück aufgrund der hygienischen Anforderungen problematisch sein kann.

Eine weitere Möglichkeit zur Bestimmung der Rotorstellung ist die Messung der durch den Rotor induzierten elektromotorischen Kraft (EMK). Hierfür müssen die Motorwicklungen allerdings stromlos geschaltet werden, was eine gewisse Zeit erfordert, in der keine Antriebsleistung zur Verfügung steht. Um diese Zeit zu verringern ist es beispielsweise bekannt abzumagnetisieren, was jedoch ein Bremsmoment zur Folge hat.

Im Ergebnis folgt ein ständiger Wechsel zwischen Antriebsmoment und fehlendem Moment oder sogar Bremsmoment. Diese ständigen Drehmomentwechsel können zu unerwünschten Vibrationen und Geräuschen führen.

In der EP 0 993 108 A2 werden ein Verfahren und eine Vorrichtung zur Ermittlung der Drehstellung des Rotors mittels EMK-Messung beschrieben. Das Verfahren beruht darauf, die in einer Statorwicklung durch den Rotor induzierte elektromotorische Kraft (EMK) zu bestimmen, wobei die anderen Statorwicklungen kurzgeschlossen werden und eine Stromlücke in der Nähe eines vermuteten Nulldurchgangs erzeugt wird.

Nachteilig ist, die Abhängigkeit der Messung vom Nulldurchgang des Statorstroms. Würde jedoch nicht in der Nähe des Stromnulldurchgangs gemessen, so hätte dies je nach Strom-Momentanwert in der Wicklung eine stark erhöhte Wartezeit hinsichtlich der Abmagnetisierung zur Folge.

Die Aufgabe der vorliegenden Erfindung ist es, eine Schaltung und ein Verfahren bereitzustellen, welches es ermöglicht, die EMK zu jeder Zeit des Betriebs einer Synchronmaschine zu bestimmen und die Motorwicklungen möglichst schnell abzumagnetisieren und die Messzeit insgesamt kurz zu halten.

### Offenbarung der Erfindung

Diese Aufgabe wird durch eine Steuerschaltung für eine Synchronmaschine eines zahnärztlichen Handstücks mit einer Spannungsversorgung gelöst, die eine durch Schalter verbundene Klemmschaltung aufweist.

Durch die Klemmschaltung wird ein besonders schnelles Abmagnetisieren der Steuerschaltung nach einer Unterbrechung der Spannungsversorgung erreicht, wodurch sich in sehr kurzer Zeit ein nahezu stromloser Zustand einstellt und eine Messung der elektromagnetischen Kraft (EMK) ermöglicht wird.

Hierdurch werden längere Unterbrechungen der Leistungsversorgung der Synchronmaschine unnötig, wodurch insbesondere Vibrationen und Geräusche vermieden werden. Dadurch eignet sich eine solche Synchronmaschine insbesondere für den Einsatz in zahnärztlichen Handinstrumenten, beispielsweise für Endodontie Behandlungen.

Weiterhin ermöglicht die erfindungsgemäße Steuerschaltung das bereitstellen eines Motors ohne Bürsten oder Sensoren für die Regelung.

Die Spannungsversorgung kann beispielsweise eine Vollbrücke sein. Die Schalter können leistungsstarke elektronische Schalter, beispielsweise Leistungsanalogschalter sein. Um die Messpause möglichst kurz zu halten, sollten die Schalter sehr schnell sein.

Vorteilhafterweise ist die Klemmschaltung an einen Sternpunkt oder einem simulierten Sternpunkt der Steuerschaltung geklemmt.

Durch das Klemmen an den Sternpunkt der Steuerschaltung wird das schnelle Abmagnetisieren und damit eine besonders kurze Messpause ermöglicht.

Hierfür kann der Sternpunkt direkt über eine zusätzliche Leitung herausgeführt werden, an die geklemmt wird. Die zusätzliche Leitung und die damit zusammenhängenden Kontaktstellen können eingespart werden, indem der Sternpunkt in der Steuerschaltung simuliert und an den simulierten Sternpunkt geklemmt wird. Dabei kann die Lage des Sternpunkts über die eingestellte Spannung an den Motorphasen vorbestimmt werden. Hierdurch können Asymmetrien der Synchronmaschine berücksichtigt und die EMK kann insbesondere auch bei sehr kleinen Spannungen noch ausreichend genau gemessen werden.

Vorteilhafterweise weist die Steuerschaltung einen Kondensator auf, der den Sternpunkt abbildet.

Gerade in dentalen Anwendungen, beispielsweise in dentalen Handstücken, sind die Platzverhältnisse sehr beengt, weshalb es vorteilhaft ist, einen zusätzlichen Zugang zum Sternpunkt durch das Simulieren des Sternpunkts einzusparen. Ein Kondensator, der die mittlere Spannung des Sternpunkts abbildet, stellt ein besonders einfaches Element einer Simulation des Sternpunkts dar.

Vorteilhafterweise weist die Steuerschaltung eine Starteinheit auf, die über einen Schalter an den Kondensator anschaltbar ist.

Eine zuschaltbare Starteinheit ermöglicht es den Kondensator vor einer Inbetriebnahme der Synchronmaschine auf einen Startwert einzustellen. So kann der Kondensator vorab auf einen zu erwartenden Wert aufgeladen werden, wodurch die Anlaufphase der Synchronmaschine deutlich verkürzt werden kann.

Weiterhin betrifft die Erfindung ein Verfahren zur Bestimmung der Drehstellung eines Rotors einer Synchronmaschine zur Drehzahlregelung der Synchronmaschine. Das Verfahren sieht vor, dass eine Stromversorgung der Synchronmaschine während eines Betriebs der Synchronmaschine für eine Gesamtdauer abgeschaltet wird und eine Klemmschaltung für ein Zeitintervall an einen Sternpunkt der Synchronmaschine angehängt wird. Nach dem Zeitintervall wird eine elektromagnetische Kraft (EMK) gemessen und aus dieser die Drehstellung bestimmt.

Das kurzzeitige Zuschalten einer Klemmschaltung ermöglicht es möglichst schnell einen zumindest nahezu stromlosen Zustand der Synchronmaschine zu erreichen, wodurch das Messen der EMK in einer besonders kurzen Zeit möglich ist. Hierdurch werden längere Unterbrechungen der Leistungsversorgung der Synchronmaschine und dadurch verursachte Vibrationen und/oder Geräusche vermieden. Daher eignet sich das Verfahren insbesondere zum Einsatz in zahnärztlichen Handinstrumenten, beispielsweise für Endodontie Behandlungen.

Vorteilhafterweise wird die EMK hochohmig gemessen. Dadurch wird der Einfluss von Spannungsabfällen an den Reihenwiderständen zur Wicklung der Synchronmaschine minimiert und kann vernachlässigt werden. Der Widerstand, über den gemessen wird, sollte hierfür mindestens 10.000 mal größer sein, als der ohmsche Anteil der Wicklung. Wird nicht hochohmig gemessen, so können solche Spannungsabfälle aber auch aus den Messwerten herausgerechnet werden, wenn die entsprechenden Konstanten bekannt sind.

Vorteilhafterweise wird der Sternpunkt durch einen Kondensator abgebildet und vor einem Einschalten der Stromversorgung für ein Betreiben der Synchronmaschine der Kondensator auf einen Erwartungswert aufgeladen.

Ein Kondensator stellt eine einfache Möglichkeit dar einen Sternpunkt zu simulieren und einen zusätzlichen Zugang zum Messen einzusparen. Nach Inbetriebnahme dauert es jedoch eine gewisse Zeit während einer Anlaufphase, bis der Kondensator einen konstanten Wert erreich und den Sternpunkt abbildet. Das Vorladen des Kondensators auf einen zu erwartenden Wert ermöglicht es, die Anlaufzeit zu verkürzen.

Vorteilhafterweise wird die EMK mehrmals pro Umdrehung des Rotors gemessen.

Das mehrmalige Messen ermöglicht es, Fehler zu vermeiden. Hierfür kann nach einer Klemmung mehrmals hintereinander gemessen und eine Änderung zwischen den Messwerten bestimmt werden. Ist die Änderung von Messwert zu Messwert minimal, so ist keine weitere Messung mehr notwendig. Die Messpause kann somit beendet und die Spannungsversorgung der Synchronmaschine wieder angehängt werden. Dies ermöglicht es, die angesetzte Messpause zur Bestimmung der EMK nochmals zu verkürzen.

### Kurze Beschreibung der Zeichnungen

Die erfindungsgemäße Steuerschaltung sowie das erfindungsgemäße Verfahren werden anhand der Zeichnungen erläutert. Es zeigen:
- Fig. 1: eine Synchronmaschine mit einer Steuerschaltung;
- Fig. 2: eine schematische Darstellung eines Verfahrens zur Bestimmung der Drehstellung eines Rotors;
- Fig. 3: eine nicht erfindungsgemäße Variante der Steuerschaltung.

### Ausführungsformen

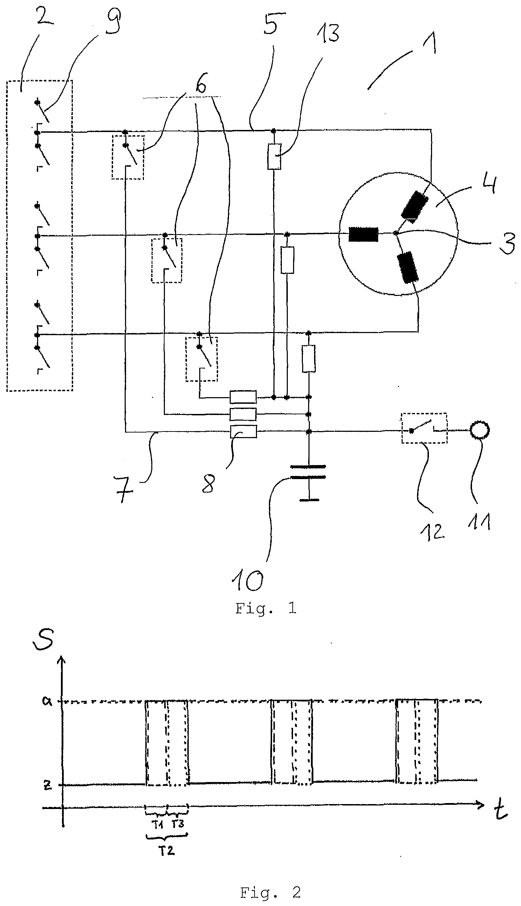

In Fig. 1 ist eine Synchronmaschine 1 mit einer als Vollbrücke ausgebildeten Spannungsversorgung 2 und drei in Stern 3 geschalteten Statorwicklungen 4 dargestellt. Die Vollbrücke 2 ist jeweils über eine Zuleitung 5 mit einer Statorwicklung 4 verbunden. An der Zuleitung 5 ist jeweils über eine Klemmung und einen Schalter 6 eine Klemmschaltung 7 angehängt.

Die Schalt- und Tastzustände S für ein Verfahren zur Messung der Drehstellung eines Rotors sind in Fig. 2 schematisch dargestellt, wobei ein geschlossener Schaltzustand bzw. ein Tastzustand mit z und ein offener Schaltzustand bzw. ein Nicht-Tasten mit a bezeichnet ist. Die Leistungsversorgung über die Vollbrücke 2 wird unterbrochen. Hierfür kann diese beispielsweise Schalter 9 aufweisen, dessen Schaltzustand als durchgezogene Linie dargestellt ist. In dieser Phase läuft die Synchronmaschine 1 quasi als Generator. Die von diesem Generator erzeugte Spannung wird allerdings von einer von einem Induktionsstrom erzeugten Spannung überlagert. Um einen unbelasteten Zustand möglichst schnell herzustellen, wird durch anhängen der Klemmschaltung 7 mittels der Schalter 6 durch die Widerstandslast der Klemmschaltung 7 abmagnetisiert. Hierfür kann die Klemmschaltung 7 beispielsweise die in Fig. 1 dargestellten Widerstände 8 aufweisen.

Die Klemmschaltung 7 wird zumindest für ein kurzes Zeitintervall T1 angehängt. Der Schaltzustand der Klemmschaltung 7 bzw. der Schalter 6 ist als gestrichelte Linie in Fig. 2 dargestellt. Nach dem hierdurch erreichten Abmagnetisieren bzw. nach Ablauf des Zeitintervalls T1 werden die Schalter 6 wieder geöffnet und die Klemmschaltung 7 wieder abgehängt. Nun läuft die Synchronmaschine 1 nahezu stromlos und die EMK wird hochohmig gegen den Sternpunkt 3 gemessen. Um den Fehler möglichst gering zu halten bzw. einen möglichst stromlosen Zustand zu erreichen, sind die Widerstände 13 und möglichst auch die Widerstände 8 hochohmig zu wählen. Das Abtasten ist mit gepunkteter Linie in Fig. 2 dargestellt. Anschließend wird die Leistungsversorgung der Synchronmaschine 1 über die Vollbrücke 2 wieder angehängt.

Die Gesamtdauer T2 der Unterbrechung der Spannungsversorgung ergibt sich somit aus dem Zeitintervall T1 und dem für die Messung der EMK notwendigen Zeitintervall T3. Die Gesamtdauer fällt besonders kurz aus, da das Zeitintervall T2 sehr kurz gehalten werden kann, da ein Abmagnetisieren der Synchronmaschine mittels der Klemmschaltung 7 besonders schnell möglich ist.

Um die für die Messung der EMK notwendige Zeit T3 möglichst kurz zu halten kann die EMK beispielsweise nach dem Klemmen, also im Anschluss an das Zeitintervall T1, mehrmals möglichst schnell hintereinander gemessen und die Messwerte jeweils mit dem vorherigen verglichen werden. Ändert sich der Messwert nicht mehr oder ist die Änderung kleiner als ein beispielsweise vorab festgelegter Grenzwert, so wird das Zeitintervall T3 beendet, also das Messen eingestellt und die Leistungsversorgung der Synchronmaschine 1 wieder angehängt.

Die Messung der EMK erfolgt in der in Fig. 1 skizzierten ersten Ausführungsvariante nicht über Messung direkt am Sternpunkt 3, da hierzu eine zusätzliche Leitung notwendig wäre und ein entsprechender Zugang beispielsweise bei Dentalmotoren häufig aus Platz- und/oder Aufwandsgründen eingespart wird. Vielmehr wird der Sternpunkt 3 in diesem Ausführungsbeispiel mittels der Widerstände 13 und eines Kondensators 10 nachgebildet. Der Kondensator 10 ist hierfür über die Widerstände 13 an die Zuleitungen 5 angehängt. Der Sternpunkt 3 wird hierdurch passiv simuliert.

Der Kondensator ist über hochohmige Widerstände 13 mit den Statorwicklungen 4 verbunden, so dass an ihm die mittlere Sternpunktspannung gemessen werden kann.

Da die Widerstände 13 hochohmig sein müssen, da sie sonst den Betrieb stören würden, dauert es nach einer Inbetriebnahme der Synchronmaschine 1 relativ lange bis sich die mittlere Sternpunktspannung am Kondensator 10 abbildet und ein ungestörter Betrieb möglich ist. Um möglichst schnell einen stabilen Wert des Kondensators 10 zu erreichen, ist im Ausführungsbeispiel der Fig. 1 zusätzlich eine Starteinheit 11 mit voreinstellbaren Startbedingungen über einen Schalter 12 an den Kondensator 10 angeschlossen. Die Starteinheit 11 kann beispielsweise eine Spannungsquelle mit voreingestelltem Spannungswert sein. Vor und/oder bei Inbetriebnahme der Synchronmaschine kann der Schalter 12 geschlossen und der Kondensator 10 vorgeladen werden, so dass er dem erwarteten Sternpunkt entspricht. Im Anschluss wird der Schalter 13 wieder geöffnet und verbleibt auch für die restliche Betriebsdauer der Synchronmaschine 1 geöffnet. Mittels der Starteinheit kann somit die passive Simulation des Sternpunkts zumindest anfänglich aktiv auf einen Anfangswert gesetzt werden. Durch das Vorladen des Kondensators können Anlaufschwierigkeiten vermieden oder zumindest eine unruhige Anlaufzeit verkürzt werden.

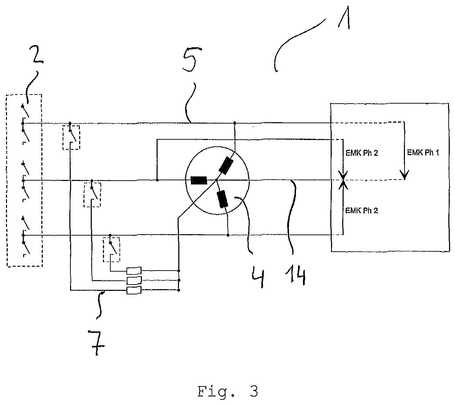

Es ist auch möglich, wie in Fig. 3 dargestellt, in nicht erfindungsgemäßer Weise die EMK über einen Zugang 14 direkt am Sternpunkt 3 abzugreifen und hierdurch den Kondensator 10 und die Starteinheit 11 einzusparen.

### Bezugszeichen

- 1: Synchronmaschine
- 2: Spannungsversorgung
- 3: Sternpunkt
- 4: Statorwicklungen
- 5: Zuleitung
- 6: Schalter
- 7: Klemmschaltung
- 8: Widerstand
- 9: Schalter
- 10: Kondensator
- 11: Starteinheit
- 12: Schalter
- 13: hochohmiger Widerstand
- 14: Zugang zum Sternpunkt
- a: offener Schaltzustand/kein Tasten
- S: Schalt-/Tastzustand
- T1: Zeitintervall
- T2: Gesamtdauer
- T3: Zeitintervall
- z: geschlossener Schaltzustand/Tastzustand

## Patentansprüche

1. Steuerschaltung für eine Synchronmaschine (1) eines zahnärztlichen Handstücks, aufweisend eine Spannungsversorgung (2), **dadurch gekennzeichnet, dass** die Steuerschaltung eine durch Schalter (6) mit der Synchronmaschine (1) verbundene und eine Widerstandslast (8) aufweisende Klemmschaltung (7) für ein besonders schnelles Abmagnetisieren der Synchronmaschine (1) nach einer Unterbrechung der Spannungsversorgung und einen Kondensator (10) aufweist, der an der Widerstandslast (8) der Klemmschaltung (7) anliegt.

2. Steuerschaltung nach Anspruch 1, **dadurch gekennzeichnet, dass** die Klemmschaltung (7) an einen Sternpunkt (3) oder einem simulierten Sternpunkt der Steuerschaltung geklemmt ist.

3. Steuerschaltung nach Anspruch 2, **dadurch gekennzeichnet, dass** die Steuerschaltung eine Starteinheit (11) aufweist, die über einen Schalter (12) an den Kondensator (10) anschaltbar ist.

4. Verfahren zur Bestimmung der Drehstellung eines Rotors einer Synchronmaschine (1) zur Drehzahlregelung der Synchronmaschine (1), **dadurch gekennzeichnet, dass**
- eine Stromversorgung der Synchronmaschine (1) während eines Betriebs der Synchronmaschine für eine Gesamtdauer (T2) abgeschaltet wird,
- eine einen Schalter (6) und eine Widerstandslast (8) aufweisende Klemmschaltung (7) für ein Zeitintervall (T1) an die Synchronmaschine (1) angehängt wird,
- nach dem Zeitintervall (T1) eine elektromagnetische Kraft (EMK) gemessen wird und
- aus der EMK die Drehstellung bestimmt wird, und
- der Kondensator (10) vor einem Einschalten der Stromversorgung für ein Betreiben der Synchronmaschine (1) auf einen Erwartungswert aufgeladen wird.

5. Verfahren nach Anspruch 4, **dadurch gekennzeichnet, dass** die EMK hochohmig gemessen wird.

6. Verfahren nach einem der Ansprüche 4 oder 5, **dadurch gekennzeichnet, dass** die EMK mehrmals pro Umdrehung des Rotors gemessen wird.

## Claims

1. Control circuit for a synchronous machine (1) of a dental hand piece, comprising a voltage supply (2), **characterized in that** the control circuit comprises a clamping circuit (7), which is connected to the synchronous machine (1) by switches (6) and comprises a resistance load (8) for a particularly rapid demagnetization of the synchronous machine (1) after an interruption of the voltage supply, and a capacitor (10), which is in contact with the resistance load (8) of the clamping circuit (7).

2. Control circuit according to Claim 1, **characterized in that** the clamping circuit (7) is clamped to a star point (3) or a simulated star point of the control circuit.

3. Control circuit according to Claim 2, **characterized in that** the control circuit comprises a starter unit (11) which can be connected to the capacitor (10) via a switch (12).

4. Method for determining the rotational position of a rotor of a synchronous machine (1) for the purpose of controlling the rotational speed of the synchronous machine (1), **characterized in that**
- a power supply of the synchronous machine (1) is switched off during operation of the synchronous machine for a total duration (T2),
- a clamping circuit (7) comprising a switch (6) and a resistance load (8) is attached to the synchronous machine (1) for a time interval (T1),
- an electromagnetic force (EMF) is measured after the time interval (T1) and
- the rotational position is determined from the EMF, and
- the capacitor (10) is charged to an expected value prior to switching on the power supply for operating the synchronous machine (1).

5. Method according to Claim 4, **characterized in that** the EMF is measured in a high-impedance manner.

6. Method according to any one of Claims 4 or 5, **characterized in that** the EMF is measured multiple times per rotation of the rotor.

## Revendications

1. Circuit de commande de machine synchrone (1) d'une pièce à main dentaire, présentant une alimentation en tension (2), **caractérisé en ce que** le circuit de commande présente un circuit de verrouillage (7) relié avec la machine synchrone (1) par des commutateurs (6) et présentant une charge résistive (8) pour une démagnétisation particulièrement rapide de la machine synchrone (1) après l'interruption de l'alimentation en tension et un condensateur (10), qui est adjacent à la charge résistive (8) du circuit de verrouillage (7).

2. Circuit de commande selon la revendication 1, **caractérisé en ce que** le circuit de verrouillage (7) est verrouillé au niveau d'un point neutre (3) ou d'un point neutre simulé du circuit de commande.

3. Circuit de commande selon la revendication 2, **caractérisé en ce que** le circuit de commande présente une unité de démarrage (11), qui peut être raccordée au condensateur (10) par un commutateur (12).

4. Procédé de détermination d'une position de rotation d'un rotor d'une machine synchrone (1) pour le réglage du nombre de tours de la machine synchrone (1), **caractérisé en ce qu'une**
- alimentation électrique de la machine synchrone (1) est arrêtée pour une durée totale (T2) pendant le fonctionnement de la machine synchrone,
- qu'un circuit de verrouillage (7) présentant un commutateur (6) et une charge résistive (8) est raccordé à la machine synchrone (1) pour un intervalle de temps (T1),
- qu'après l'intervalle de temps (T1), une force électromagnétique (FEM) est mesurée et
- que la position de rotation est déterminée à partir de la FEM, et
- que le condensateur (10) est chargé à une valeur escomptée avant un branchement de l'alimentation électrique pour un fonctionnement de la machine synchrone (1).

5. Procédé selon la revendication 4, **caractérisé en ce que** la FEM est mesurée à impédance élevée.

6. Procédé selon l'une des revendications 4 ou 5, **caractérisé en ce que** la FEM est mesurée plusieurs fois pour une rotation du rotor.
